# EUROPEAN PATENT SPECIFICATION

(11) **EP 3 745 666 B1**
(45) Date of publication and mention of the grant of the patent: **13.08.2025**
(21) Application number: 18902451.6
(22) Date of filing: 16.10.2018
(51) Int. Cl.: H04L 65/80, H04L 65/1083, H04L 65/1094, H04L 65/752

(54) **MEDIA CONTROL METHOD AND APPARATUS FOR CONVERGED DEVICE AND COMMUNICATION TERMINAL**
MEDIENSTEUERUNGSVERFAHREN UND -EINRICHTUNG FÜR KONVERGIERTE VORRICHTUNG UND KOMMUNIKATIONSENDGERÄT
PROCÉDÉ ET APPAREIL DE COMMANDE MULTIMÉDIA POUR DISPOSITIF DE FUSION ET TERMINAL MOBILE

(30) Priority: 25.01.2018 CN 201810074744
(43) Date of publication of application: 02.12.2020
(73) Proprietor: ZTE Corporation, Shenzhen Guangdong 518057 (CN)
(72) Inventor: GAO, Yang, Shenzhen, Guangdong 518057 (CN); ZHANG, Lu, Shenzhen, Guangdong 518057 (CN); YANG, Qiang, Shenzhen, Guangdong 518057 (CN)
(74) Representative: WBH Wachenhausen Patentanwälte PartG mbB
(86) International application number: PCT/CN2018/110515
(87) International publication number: WO 2019/144653

(56) References cited:
- EP-A1- 3 288 230
- EP-A1- 3 313 026
- WO-A1-2016/201939
- CN-A- 101 420 390
- CN-A- 102 082 766
- CN-A- 102 651 701
- CN-A- 106 209 755
- US-A1- 2007 217 430

## Description

### TECHNICAL FIELD

The present application relates to, but not limited to, the field of communication, and in particular to a media control method and apparatus for a converged device, and a communication terminal.

### BACKGROUND

Multimedia communication has always been a pursuit in the field of communication, and has been improved constantly. In the context of 4G, technologies such as voice over LTE (VoLTE) or rich communication suit (RCS) based on LTE network have brought opportunities for users of mobile device to widely use multimedia communication.

The existing user equipments (UEs) such as mobile phones (particularly smart phones) have been widely provided with front cameras and capabilities of video steaming, that is, video calls can be realized on UEs. However, due to the limitation of hardware and multimedia capabilities of UEs, large-screen and high-definition multimedia communication cannot be realized. Moreover, from a future perspective, the capability of multimedia communication, for example communication supporting holographic projection, cannot be completely constructed or borne by simple UEs. To address this problem, a converged communication technology has emerged, where a device with multimedia functions such as large screen, high definition and holographic projection is introduced, as a converged device, into an IP multimedia subsystem (IMS) through a UE, and multimedia stream interaction with a remote UE is realized by the multimedia capability of the converged device, thereby realizing better multimedia communication experience.

WO2016/201939A1 relates to a method, device and user equipment (UE) for establishing a dedicated bearer. The method comprises: determining that a media stream between an external device and a remote device needs to be transmitted via a UE, wherein the UE communicates with the remote device via a bearer network; and establishing a dedicated bearer between the UE and the bearer network, wherein the media stream between the external device and the remote device is transmitted with the dedicated bearer.

CN106209755A provides an architecture, a method, a fusion device, and a user equipment for implementing multimedia communication, and can implement multimedia communication simply based on the idea of control and media separation.

However, in practical applications of the converged communication technology, when the transmission of a media stream is affected by poor quality of a communication connection network for transmitting the media stream, the multimedia communication will be affected greatly, thereby reducing the satisfaction of experience of the user.

### SUMMARY

The invention is set out in the appended set of claims.

In embodiments of the present application, a media control method and a communication terminal are provided.

According to examples of the present application, in the process of transferring a media stream between the converged device and a remote device, the communication terminal acquires new target media description information in response to detecting that a quality parameter of a communication connection for media stream transmission does not match a preset threshold of the quality parameter (i.e., the communication connection for media stream transmission is poor in quality); and then, the communication terminal initiate, according to the target media description information, establishment of a new media interface for media stream interaction between the communication terminal and the remote device, so that the media stream is transmitted by the new established media interface. Accordingly, it is ensured as far as possible that the multimedia communication is normally provided for users while the communication connection for media stream transmission is poor in quality, thereby improving the compatibility of converged devices with various media capabilities in various network coverage scenarios after they access an IMS, and greatly improving the satisfaction of multimedia communication experience of users.

### BRIEF DESCRIPTION OF DRAWINGS

Fig. 1 is a flowchart of a media control method for a converged device according to an embodiment of the present application;
Fig. 2 is a structural schematic diagram of a media control apparatus for a converged device according to an embodiment of the present application;
Fig. 3 is a structural schematic diagram of a communication terminal according to an embodiment of the present application;
Fig. 4 is a flowchart of establishment of call of a converged device between a UE and a remote UE according to an embodiment of the present application;
Fig. 5 is a flowchart of a media handover in a media stream full fallback mode according to an embodiment of the present application;
Fig. 6 is a flowchart of a media handover in a media stream partial fallback mode according to an embodiment of the present application;
Fig. 7 is a flowchart of a media handover by reducing the code rate of a media stream according to an embodiment of the present application; and
Fig. 8 is a flowchart of a media handover by reducing the code rate of a media stream in case of low quality of remote communication according to an embodiment of the present application.

### DETAILED DESCRIPTION

Objects, technical schemes and advantages of the present application will be clearer from a detailed description of embodiments of the present application in conjunction with the drawings. It should be understood that the specific embodiments described herein are merely used for explaining the present application, rather than limiting the present application.

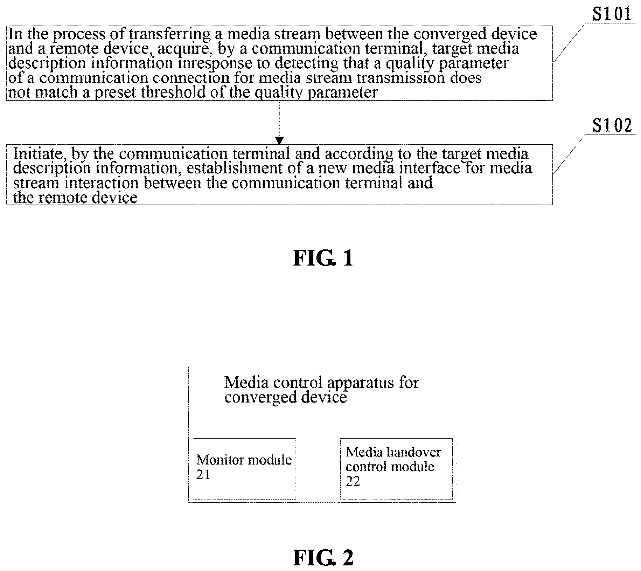

To reduce the influence on the transmission of media streams and ensure the normal operation of multimedia communication when a communication connection network for media stream transmission in the converged communication technology is poor in quality, in the present embodiment, a media control method for a converged device is provided. Referring to Fig. 1, the method includes:
At S101, in the process of transferring a media stream between a converged device and a remote device, a communication terminal acquires target media description information in response to detecting, by the communication terminal, that a quality parameter of a communication connection for media stream transmission between the communication terminal and the converged device does not match a preset threshold of the quality parameter.

In the present embodiment, the remote device may be a remote communication terminal or a remote media server, for example, a video server or the like. In the present embodiment, the communication terminal includes, but not limited to, various terminal UEs with communication capabilities, for example, includes but not limited to, smart phones, Pad-type tablet computers, notebook computers, intelligent wearable devices (smart watches, bracelets, etc.) or other intelligent UEs.

In the present embodiment, the converged device includes, but not limited to, devices with multimedia, short-range communication and remote communication capabilities, and/or devices with multimedia and short-range communication capabilities but without remote communication capabilities. In the present embodiment, the short-range communication includes, but not limited to, Bluetooth, infrared communication, Wi-Fi and NFC (near field communication).

In the present embodiment, the converged device may be introduced into an IP multimedia subsystem (IMS) through the communication terminal, and acquire a voice and/or video media stream of the communication terminal by using the multimedia function and transmit the acquired voice and/or video media stream to the remote device through the communication terminal. The converged device may also receive a voice and/or video media stream of the remote device through the communication terminal and displays to a user the acquired voice and/or video media stream by using the multimedia function. It should be understood that the media stream in the present embodiment includes, but not limited to, a voice media stream and a video media stream. In the present embodiment, the media stream transmitted by the converged device may be forwarded to the remote device through the communication terminal, and the media stream transmitted by the remote device may be forwarded to the converged device through the communication terminal.

In the present embodiment, the converged device may be connected with the communication terminal through short-range distance communication, or may be connected with the communication terminal through the remote communication capability of the converged device.

In the present embodiment, the quality parameter of the communication connection may be at least one quality parameter used for characterizing the communication connection, for example, including but not limited to at least one of signal power, a bit error rate, a packet loss rate, transmission delay and signal strength; and, the corresponding preset threshold of the quality parameter includes at least one of a signal power threshold, a bit error rate threshold and a packet loss rate threshold. When the detected value of signal power is less than the preset signal power threshold, it indicates that the signal power does not match the signal power threshold. When the detected bit error rate is greater than the preset bit error rate threshold, it indicates that the bit error rate does not match the bit error rate threshold. When the detected packet loss rate is greater than the preset packet loss rate threshold, it indicates that the packet loss rate does not match the packet loss rate threshold. Certainly, it should be understood that the determination may be performed by using at least two mass parameters in combination, and which will not be repeatedly described here.

In the present embodiment, the specific media handover mode is determined based on the result of determination of the quality of the communication connection for media stream transmission, so as to determine whether to acquire the media description information of the communication terminal to allow full fallback of the media stream to the communication terminal, or acquire the media description of both the communication terminal and the converged device to allow partial fallback of the media stream to the communication terminal, or acquire new media description information of the converged device to realize reduction of the bit rate of the media stream.

At S102, initiate and establish, by the communication terminal and according to the target media description information, a new media interface for media stream interaction between the communication terminal and the remote device and perform media stream interaction.

In the present embodiment, when the communication terminal acquires its own media description information to allow full fallback of the media stream to the communication terminal, establishment of a new media interface between the communication terminal and the remote device is initiated in this step. When the communication terminal acquires the media description information of both the communication terminal and the converged device, establishment of a new media interface between the communication terminal and the remote device as well as a new media interface between the converged device and the remote device is initiated in this step. When the communication terminal acquires new media description information of the converged device, establishment of a new media interface between the communication terminal and the remote device as well as a media interface between the converged device and the remote device is initiated in this step. It should be understood that the new media interface established in this step incudes one or more media streams.

As described above, in the present embodiment, when detecting, by the communication terminal, that the communication connection for media stream transmission is poor in quality, it may be the case that the communication connection for media stream transmission between the converged device and the communication terminal is poor in quality (when the converged device is connected with the communication terminal through short-range communication, it may be referred to as poor short-range communication quality at this time), or it may also be the case that the communication connection for media stream transmission between the communication terminal and the remote device is poor in quality (this situation may be referred to as poor remote communication quality in the present embodiment).

In the present embodiment, when detecting, by the communication terminal, that the quality parameter of the communication connection for media stream transmission between the communication terminal and the converged device does not match the preset threshold of the quality parameter (that is, the communication terminal detects that the communication connection for media stream transmission between the communication terminal and the converged device is poor in quality), the communication terminal may adopt any one of the following modes: full fallback of the media stream, partial fallback of the media stream, and reducing the code rate of the media stream. These modes will be exemplarily described below in the present embodiment.

When full fallback of the media stream to the communication terminal is adopted, at this time, the first target media description information acquired by the communication terminal includes first media description information of the communication terminal.

In this case, the initiating and establishing, by the communication terminal and according to the target media description information, a new media interface for media stream interaction between the communication terminal and the remote device and performing media stream interaction includes:
establishing, by the communication terminal and according to the first media description information (specifically, an SDP (session description protocol) structure) of the communication terminal, a first media interface for media stream interaction between the communication terminal and the remote device via a register server.

Specifically, the communication terminal may transmit, to the register server, a media handover request containing the first media description information to establish a first media interface between the communication terminal and the remote device. The media stream falls from the converged device back to the communication terminal, and the media stream may be continuously transmitted with better network quality. In the present embodiment, the media handover request includes, but not limited to, any one of a media MODIFY request, a Re-INVITE request, a data UPDATE request. The specific way of establishing the media interface may be any way of establishing the media interface, and will not be repeatedly described here.

When the media stream partially falls back to the communication terminal, in this case, the target media description information acquired by the communication terminal may include second media description information of the communication terminal and third media description information of the converged device. In this case, the initiating and establishing, by the communication terminal and according to the target media description information, a new media interface for media stream interaction between the communication terminal and the remote device and performing media stream interaction includes: establishing, by the communication terminal and according to the second media description information and the third media description information, a second media interface between the communication terminal and the remote device and a third media interface between the converged device and the remote device, so that part of the media stream falls back to the communication terminal and other part of the media stream is still transmitted between the converged device and the remote device.

In the present embodiment, the second media description information and the third media description information correspond to different media streams, for example:
In an example, a media stream corresponding to the second media description information has a bandwidth greater than that of a media stream corresponding to the third media description information. In this case, the media stream having a larger bandwidth (e.g., a video media stream) partially falls back to the communication terminal, and the media stream having a smaller bandwidth (e.g., a voice media stream) is partially transmitted between the converged device and the remote device.

In another example, the media stream corresponding to the second media description information is a media stream which is supported by a media capability of the communication terminal, and the media stream corresponding to the third media description information is a media stream which is not supported by the media capability of the communication terminal.

In a case where the code rate of the media stream is reduced, the target media description information acquired by the communication terminal includes fourth media description information of the converged device. In this case, the fourth media description information contains information used for representing a code rate of first new media stream, and the code rate of first new media stream is less than a code rate used for current media stream transmission by the converged device. In this case, initiating and establishing, by the communication terminal and according to the target media description information, new media interface for media stream interaction between the communication terminal and the remote device and performing media stream interaction includes: establishing, by the communication terminal and according to the acquired fourth media description information, a fourth media interface for media stream interaction between the converged device and the remote device via a register server, thereby realizing transmission of the media stream at a reduced code rate.

It should be understood that one or more of the above three modes may be flexibly selected according to the specific situation. For example, according to the media capability of the communication terminal, the specific quality of the communication connection or the like, it may be determined whether to use the mode of full fallback of the media stream, or partial fallback of the media stream, or reducing the code rate of the media stream.

In the present embodiment, in response to detecting that the remote communication is poor in quality, the communication terminal may adopt the mode of reducing the code rate of the media stream. In this case, when the communication terminal detects that the communication connection for media stream transmission between the communication terminal and the remote device is poor in quality (that is, the communication terminal detects that the quality parameter of the communication connection for media stream transmission between the communication terminal and the remote device does not match the preset threshold of the quality parameter), the acquired target media description information includes fifth media description information of the converged device. The fifth media description information contains information used for representing a code rate of second new media stream, and the code rate of second new media stream is less than a code rate used for current media stream transmission by the converged device. The communication terminal establishes, according to the acquired fifth media description information, a fifth media interface for media stream interaction between the converged device and the remote device via a register serer, so as to realize transmission of the media stream at a reduced code rate.

It should be understood that, according to the specific application scenario, the media description information in the present embodiment may further include, but not limited to, at least one of a microphone parameter, a loudspeaker parameter, a camera parameter and a screen parameter.

By the media control method for a converged device provided in the present embodiment, the proper media handover may be performed when the network quality is poor in the process of accessing the converged device to an IMS to realize media stream communication with the remote device, so that it is ensured as far as possible that multimedia communication (e.g., including but not limited to various multimedia calls, live streaming, etc.) is continuously provided for the user. Moreover, the compatibility of large-bandwidth media devices accessing the IMS as converged devices in various network coverage scenarios can be improved, and the user's multimedia communication experience can be further improved.

To reduce the influence on the transmission of media streams and ensure the normal operation of multimedia communication when a communication connection network for media stream transmission in the converged communication technology is poor in quality, in the present embodiment, a media control apparatus for a converged device is provided. The media control apparatus for a converged device is applied in a communication terminal. Referring to Fig. 2, the apparatus includes a monitor module 21 and a media handover control module 22.

The monitor module 21 is configured to, in the process of transferring a media stream between the converged device and a remote device by a communication terminal, acquire target media description information in response to detecting that a quality parameter of a communication connection for media stream transmission does not match a preset threshold of the quality parameter. For the specific detection process and the specific process of acquiring the media description information, reference may be made to those described in Embodiment one, which will not be repeatedly described here.

The media handover control module 22 is configured to initiate, according to the target media description information, establishment of a new media interface for media stream interaction with the remote device. For the specific process, reference may be made to Embodiment one, which will not be repeatedly described here.

It should be understood that, the functions of the monitor module 21 and the media handover control module 22 in the present embodiment may be implemented by a processor in the communication terminal.

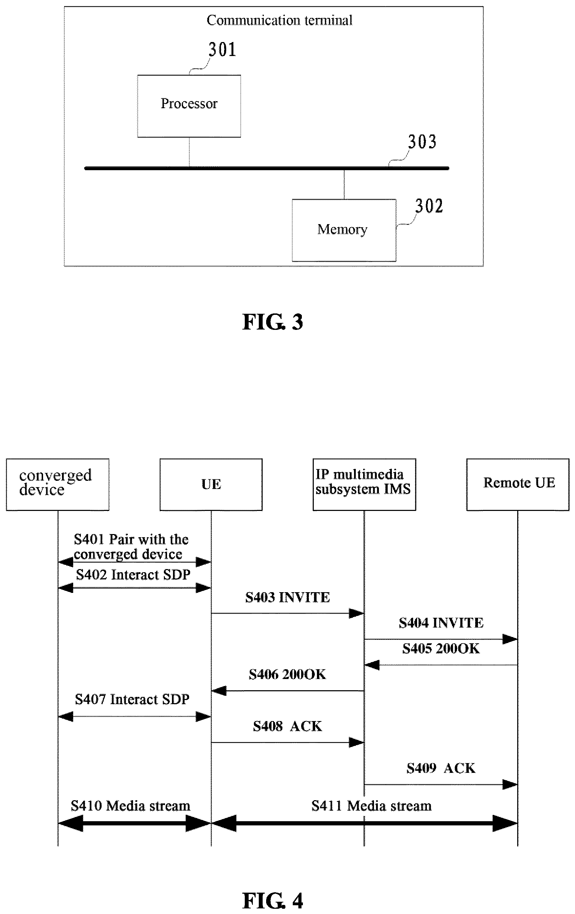

In the present embodiment, a communication terminal is further provided. Referring to Fig. 3, the communication terminal includes a processor 301, a memory 302 and a communication bus 303.

The communication bus 303 is configured to realize communication between the processor 301 and the memory 302.

The processor is configured to execute one or more programs stored in the memory so as to perform the steps in the media control method for a converged device described in Embodiment one.

In the present embodiment, a computer-readable storage medium is further provided. The computer-readable storage medium stores one or more programs that, when executed by one or more processors, perform the steps in the media control method for a converged device described in Embodiment one.

The computer-readable storage medium may be a non-temporary storage medium.

To better understand the present application, the present application will be further described exemplarily in the present embodiment by way of several specific examples. In this example, the communication terminal is a UE, the remote device is a remote UE, the media description information is an SDP structure, and the converged device is connected with the UE by short-range communication.

Referring to Fig. 4, the process of establishing a converged device call between the UE and the remote UE in this example includes the following steps.

At S401, the converged device is paired with the UE. The matching mode may be selected according to the specific short-range communication mode used.

At S402, the UE interacts with the converged device to acquire a session description protocol (SDP) of the converged device.

In this example, the UE may transmit a media description information inquiry request to the converged device to acquire the SDP of the converged device, or the converged device may actively push the SDP to the UE after it is successfully paired with the UE.

At S403, the UE initiates a call establishment request INVITE by using the SDP of the converged device and then transmits the call establishment request INVITE to the IMS.

At S404, the IMS transmits the call establishment request INVITE to the remote UE.

At S405, the remote UE returns 200OK which contains the SDP of the remote UE.

At S406, the UE receives the 200OK.

At S407, the UE interacts with the converged device by using the received SDP of the remote UE in the 200OK.

At S408, the UE returns ACK.

At S409, the remote UE receives the ACK and establishes a call.

At S410, the converged device acquires a network access through the UE and establishes a media interface with the remote UE. For example, as a 4G router, the UE provides the converged device with a Wi-Fi hotspot, a media stream in the converged device is transferred by the UE, and the UE forwards, to the converged device, the media stream transmitted by the remote UE.

At S411, the UE transfers the media stream, and realizes media stream interaction with the remote UE.

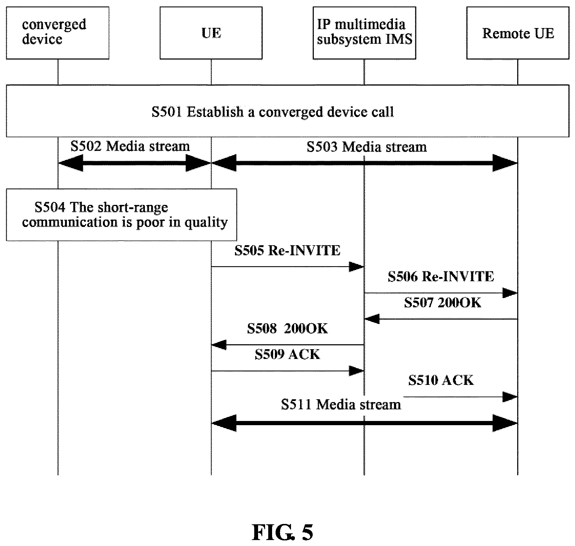

In an example, when the UE detects that the short-range communication is poor in quality, the media handover may be realized by a full fall back of the media stream (at this time, the media capability of the UE supports that the media stream fully falls back. One implementation is shown in Fig. 5, including the following steps.

At S501, the UE establishes a converged device call with the remote UE. The process may refer to Fig. 4.

At S502, the converged device acquires a network access through the UE. As described above, as a 4G router, the UE provides the converged device with a Wi-Fi hotspot, and the media stream in the converged device is transferred by the UE.

At S503, the UE transfers the media stream, and realizes media stream interaction with the remote UE.

At S504, the UE detects that the short-range communication between the UE and the converged device is poor in quality (at this time, the media stream is transmitted by the short-range communication).

At S505, the UE initiates a media handover request to the remote UE by using the media interface SDP of the UE, and transmits Re-INVITE (also possibly a media MODIFY request, a data UPDATE request or the like) to the IMS.

At S506, the IMS forwards Re-INVITE to the remote UE.

At S507, the remote UE returns 200OK.

At S508, the UE receives the 200OK.

At S509, the UE returns ACK.

At S510, the remote UE receives the ACK.

At S511, at this time, the media handover is completed, and the UE establishes a media interface with the remote UE, so that the media stream falls from the converged device back to the UE, and the media stream may be continuously transmitted with better network quality.

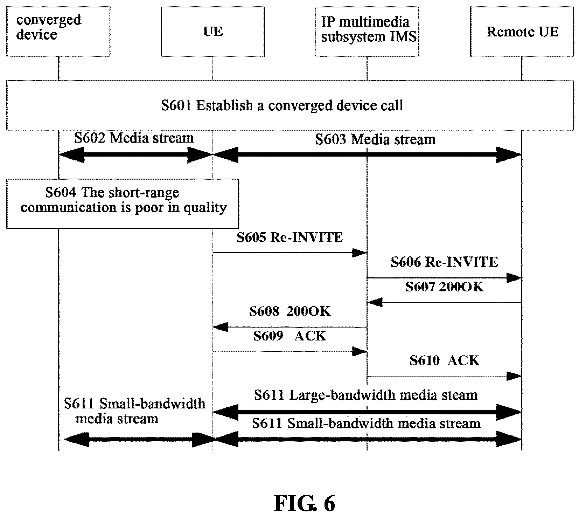

In an example, in response to the UE detecting that the short-range communication is poor in quality, the media handover may be realized by partially transmitting the media stream back (at this time, the media capability of the UE supports that the media stream is partially transmitted back. One implementation is shown in Fig. 6, which includes.

At S601, the UE establishes a converged device call with the remote UE. The process in this step may refer to Fig. 4.

At S602, the converged device acquires a network access through the UE. For example, as a 4G router, the UE provides the converged device with a Wi-Fi hotspot, and the media stream in the converged device is transferred by the UE.

At S603, the UE transfers the media stream, and realizes media stream interaction with the remote UE.

At S604, the UE detects that the short-range communication between the UE and the converged device is poor in quality, so that a large-bandwidth media stream (e.g., a video media stream or other large-bandwidth media streams) cannot be borne.

At S605, the UE constructs an SDP containing the two media streams by using the SDP of the converged device (an SDP corresponding to a small-bandwidth media stream (e.g., a voice media stream)) and the media interface SDP of the UE (an SDP corresponding to a large-bandwidth media stream), initiates a media handover request to the remote UE and transmits Re-INVITE to the IMS.

At S606, the IMS forwards the Re-INVITE to the remote UE.

At S607, the remote UE returns 200OK.

At S608, the UE receives the 200OK.

At S609, the UE returns ACK.

At S610, the remote UE receives the ACK.

At S611, at this time, the media handover is completed, both the UE and the converged device establish media interfaces with the remote UE. Thus, the large-bandwidth media stream is transmitted from the converged device back to the UE, and the media stream may be continuously transmitted with better network quality; and, the small-bandwidth media stream is still transmitted between the converged device and the remote UE in the mode before handover.

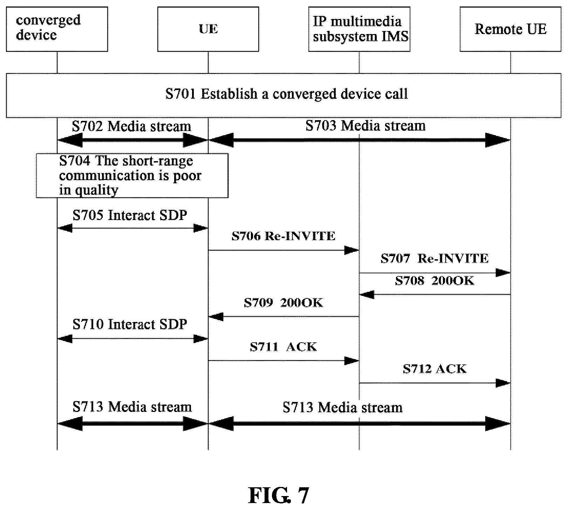

In an example, when the UE detects the short-range communication is poor in quality, the media handover may be realized by reducing the code rate of the media stream. One implementation is shown in Fig. 7, including the following steps.

At S701, the UE establishes a converged device call with the remote UE.

At S702, the converged device acquires a network access through the UE. For example, as a 4G router, the UE provides the converged device with a Wi-Fi hotspot, and the media stream in the converged device is transferred by the UE.

At S703, the UE transfers the media stream, and realizes media stream interaction with the remote UE.

At S704, the UE detects that the short-range communication is poor in quality, for example, the UE moves to a signal coverage blind area for the short-range communication.

At S705, the UE interacts with the converged device to acquire an SDP corresponding to the reduced new media stream code rate.

At S706, the UE initiates a media handover request to the remote UE by using the acquired SDP, and transmits Re-INVITE to the IM.

At S706, the IMS forwards the Re-INVITE to the remote UE.

At S708, the remote UE returns 200OK which contains the SDP of the remote UE.

At S709, the UE receives the 200OK.

At S710, the UE interacts, with the converged device, the SDP acquired from the remote UE.

At S711, the UE returns ACK.

At S712, the remote UE receives the ACK.

At S713, at this time, the media handover is completed, the converged device establishes a media interface with the remote UE, and code rate of the media stream is reduced, and the media stream may be continuously transmitted with the current network quality.

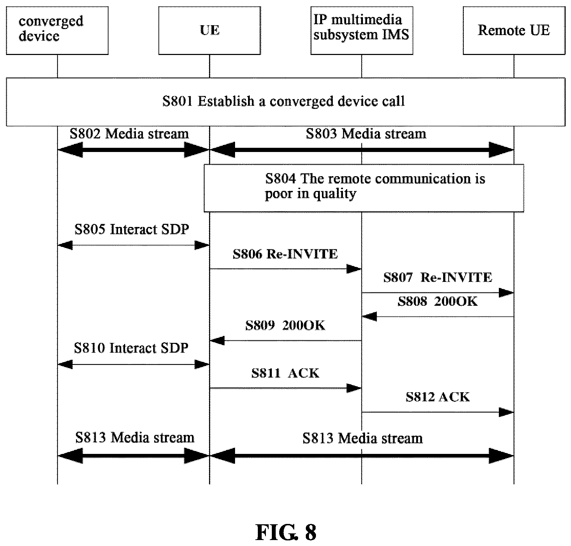

In an example, in response to the UE detecting the remote communication is poor in quality, the media handover may be realized by reducing the code rate of the media stream. One implementation is shown in Fig. 8, including the following steps.

At S801, the UE establishes a converged device call with the remote UE.

At S802, the converged device acquires a network access through the UE. For example, as a 4G router, the UE provides the converged device with a Wi-Fi hotspot, and the media stream in the converged device is transferred by the UE.

At S803, the UE transfers the media stream, and realizes media stream interaction with the remote UE.

At S804, the UE detects that the remote communication is poor in quality, for example, low network transmission quality which is caused by wireless coverage.

At S805, the UE interacts with the converged device to acquire an SDP corresponding to the reduced new media stream code rate (e.g. reduction from a high rescheme to an ordinary rescheme or a low rescheme).

At S806, the UE initiates a media handover request to the remote UE by using the acquired SDP, and transmits Re-INVITE to the IM.

At S807, the IMS forwards the Re-INVITE to the remote UE.

At S808, the remote UE returns 200OK which contains the SDP of the remote UE.

At S809, the UE receives the 200OK.

At S810, the UE interacts, with the converged device, the SDP acquired from the remote UE.

At S811, the UE returns ACK.

At S812, the remote UE receives the ACK.

At S813: at this time, the media handover is completed, the converged device establishes a media interface with the remote UE, and code rate of the media stream is reduced, and the media stream may be continuously transmitted with the current network quality.

In the present embodiment, the UE may detect the transferred media stream. In response to detecting that the media stream transmission goes wrong due to low network quality, a proper media handover is initiated by the UE according to the specific environment of the network that goes wrong and the characteristics of the media stream, so that the multimedia communication can be continued, and thereby improving the satisfaction of experience of the user.

Apparently, those skilled in the art should understand that each module or each step of the above embodiments of the present application may be performed by a general computing device, they may be concentrated on a single computing device, or distributed on a network composed of multiple computing devices, alternatively, they may be performed with program codes executable by a computing device, so that they may be stored in a computer storage medium (ROM/RAM, magnetic disk, optical disk) and executed by the computing device, and in some cases, the steps shown or described may be performed in a different order, or they may be fabricated into individual integrated circuit modules separately, or multiple modules or steps thereof may be fabricated into a single integrated circuit module. Therefore, the present application is not limited to any specific combination of hardware and software.

The forgoing content merely show the further detailed description of the embodiments of the present application with reference to the specific implementations, and the specific implementations of the present application cannot been deemed as being limited thereto. The invention is defined by the appended claims.

## Claims

1. A media control method performed by a communication terminal, comprising:
in a process of transferring a media stream between the converged device and a remote device, acquiring (S101), by a communication terminal, target media description information in response to detecting, by the communication terminal, that a quality parameter of a communication connection for media stream transmission between the communication terminal and the converged device does not match a preset threshold of the quality parameter, wherein the converged device communicates with the remote device via the communication device, the target media description information is the target media description information of the communication terminal or the target media description information of the converged device, and
based on the result of determination of the quality parameter of the communication connection for media stream transmission, the communication terminal adopts any one of the following media handover modes: acquiring the media description information of the communication terminal to allow full fallback of the media stream to the communication terminal, acquiring the media description of both the communication terminal and the converged device to allow partial fallback of the media stream to the communication terminal, and acquiring new media description information of the converged device to reduce the code rate of the media stream; and
initiating and establishing (S102), by the communication terminal and according to the target media description information, a new media interface for media stream interaction between the communication terminal and the remote device and performing media stream interaction.

2. The media control method according to claim 1, wherein acquiring (S101), by a communication terminal, target media description information in response to detecting, by the communication terminal, that a quality parameter of a communication connection between the communication terminal and the converged device for media stream transmission does not match a preset threshold of the quality parameter comprises:
acquiring, by the communication terminal, first media description information of the communication terminal in response to detecting, by the communication terminal, that a quality parameter of a communication connection for media stream transmission between the communication terminal and the converged device does not match a preset threshold of the quality parameter; and
initiating and establishing (S102), by the communication terminal and according to the target media description information, a new media interface for media stream interaction between the communication terminal and the remote device and performing media stream interaction comprises:
establishing, by the communication terminal and according to the first media description information of the communication terminal, a first media interface for media stream interaction between the communication terminal and the remote device via a register server.

3. The media control method according to claim 1, wherein acquiring (S101), by a communication terminal, target media description information in response to detecting, by the communication terminal, that a quality parameter of a communication connection for media stream transmission between the communication terminal and the converged device does not match a preset threshold of the quality parameter comprises:
acquiring, by the communication terminal, second media description information of the communication terminal and third media description information of the converged device in response to detecting that a quality parameter of a communication connection for media stream transmission between the communication terminal and the converged device does not match a preset threshold of the quality parameter, the second media description information and the third media description information corresponding to different media streams; and
the initiating and establishing (S102), by the communication terminal and according to the target media description information, a new media interface for media stream interaction between the communication terminal and the remote device and performing media stream interaction comprises:
establishing, by the communication terminal and according to the second media description information and the third media description information, a second media interface between the communication terminal and the remote device and a third media interface between the converged device and the remote device via a register server.

4. The media control method according to claim 1, wherein acquiring (S101), by a communication terminal, target media description information in response to detecting, by the communication terminal, that a quality parameter of a communication connection for media stream transmission between the communication terminal and the converged device does not match a preset threshold of the quality parameter comprises:
acquiring, by the communication terminal, fourth media description information in response to detecting that a quality parameter of a communication connection for media stream transmission between the communication terminal and the converged device does not match a preset threshold of the quality parameter, the fourth media description information containing information used for representing a code rate of first new media stream, the code rate of first new media stream being less than a code rate used for current media stream transmission by the converged device; and
initiating and establishing (S102), by the communication terminal and according to the target media description information, a new media interface for media stream interaction between the communication terminal and the remote device and performing media stream interaction comprises:
establishing, by the communication terminal and according to the fourth media description information, a fourth media interface for media stream interaction between the converged device and the remote device via a register server.

5. The media control method according to claim 3, wherein a media stream corresponding to the second media description information has a bandwidth greater than that of a media stream corresponding to the third media description information.

6. The media control method according to claim 3, wherein the media stream corresponding to the second media description information is a media stream which is supported by a media capability of the communication terminal, and the media stream corresponding to the third media description information is a media stream which is not supported by a media capability of the communication terminal.

7. The media control method according to any one of claims 2 to 6, wherein the communication connection for media stream transmission between the communication terminal and the converged device is a short-range communication connection.

8. The media control method according to any one of claims 1 to 7, wherein acquiring (S101), by a communication terminal, target media description information in response to detecting, by the communication terminal, that a quality parameter of a communication connection for media stream transmission between the communication terminal and the converged device does not match a preset threshold of the quality parameter comprises:
acquiring, by the communication terminal, fifth media description information in response to detecting that a quality parameter of a communication connection for media stream transmission between the communication terminal and the remote device does not match a preset threshold of the quality parameter, the fifth media description information containing information used for representing a code rate of second new media stream, the code rate of second new media stream being less than a code rate used for current media stream transmission by the converged device; and
initiating and establishing (S102), by the communication terminal and according to the target media description information, a new media interface for media stream interaction between the communication terminal and the remote device and performing media stream interaction comprises:
establishing, by the communication terminal and according to the fifth media description information, a fifth media interface for media stream interaction between the converged device and the remote device via a register server.

9. A communication terminal, comprising a memory (302), a processor (301), a communication bus (303) configured to realize communication between the processor (301) and the memory (302), and a data processing program stored in the memory (302) and executable by the processor (301), wherein the data processing program, when executed by the processor (301), causes the processor (301) to carry out the steps of the media control method according to any one of claims 1 to 8

## Patentansprüche

1. Mediensteuerungsverfahren, das von einem Kommunikationsendgerät durchgeführt wird, umfassend:
in einem Prozess des Übertragens eines Medienstroms zwischen der konvergierten Vorrichtung und einer entfernten Vorrichtung, Erfassen (S101), durch ein Kommunikationsendgerät, von Zielmedienbeschreibungsinformation als Reaktion auf das Erkennen, durch das Kommunikationsendgerät, dass ein Qualitätsparameter einer Kommunikationsverbindung zur Medienstromübertragung zwischen dem Kommunikationsendgerät und der konvergierten Vorrichtung nicht mit einem voreingestellten Schwellenwert des Qualitätsparameters übereinstimmt, wobei die konvergierte Vorrichtung mit der entfernten Vorrichtung über die Kommunikationsvorrichtung kommuniziert, die Zielmedienbeschreibungsinformation die Zielmedienbeschreibungsinformation des Kommunikationsendgeräts oder die Zielmedienbeschreibungsinformation der konvergierten Vorrichtung ist, und
basierend auf dem Ergebnis der Bestimmung des Qualitätsparameters der Kommunikationsverbindung zur Medienstromübertragung, das Kommunikationsendgerät einen der folgenden Medienübergabemodi übernimmt:
Erfassen der Medienbeschreibungsinformation des Kommunikationsendgeräts, um einen vollständigen Rückfall des Medienstroms auf das Kommunikationsendgerät zu ermöglichen, Erfassen der Medienbeschreibung sowohl des Kommunikationsendgeräts als auch der konvergierten Vorrichtung, um einen teilweisen Rückfall des Medienstroms auf das Kommunikationsendgerät zu ermöglichen, und Erfassen neuer Medienbeschreibungsinformation der konvergierten Vorrichtung, um die Coderate des Medienstroms zu reduzieren, und
Initiieren und Einrichten (S102), durch das Kommunikationsendgerät und gemäß der Zielmedienbeschreibungsinformation, einer neuen Medienschnittstelle zur Medienstrominteraktion zwischen dem Kommunikationsendgerät und der entfernten Vorrichtung und Durchführen einer Medienstrominteraktion.

2. Mediensteuerungsverfahren nach Anspruch 1, wobei das Erfassen (S101), durch ein Kommunikationsendgerät, von Zielmedienbeschreibungsinformation als Reaktion auf das Erkennen, durch das Kommunikationsendgerät, dass ein Qualitätsparameter einer Kommunikationsverbindung zwischen dem Kommunikationsendgerät und der konvergierten Vorrichtung zur Medienstromübertragung nicht mit einem voreingestellten Schwellenwert des Qualitätsparameters übereinstimmt, umfasst:
Erfassen, durch das Kommunikationsendgerät, von erster Medienbeschreibungsinformation des Kommunikationsendgeräts als Reaktion auf das Erkennen, durch das Kommunikationsendgerät, dass ein Qualitätsparameter einer Kommunikationsverbindung zur Medienstromübertragung zwischen dem Kommunikationsendgerät und der konvergierten Vorrichtung nicht mit einem voreingestellten Schwellenwert des Qualitätsparameters übereinstimmt, und
Initiieren und Einrichten (S102), durch das Kommunikationsendgerät und gemäß der Zielmedienbeschreibungsinformation, einer neuen Medienschnittstelle zur Medienstrominteraktion zwischen dem Kommunikationsendgerät und der entfernten Vorrichtung und Durchführen einer Medienstrominteraktion umfasst:
Einrichten, durch das Kommunikationsendgerät und gemäß der ersten Medienbeschreibungsinformation des Kommunikationsendgeräts, einer ersten Medienschnittstelle zur Medienstrominteraktion zwischen dem Kommunikationsendgerät und der entfernten Vorrichtung über einen Registerserver.

3. Mediensteuerungsverfahren nach Anspruch 1, wobei das Erfassen (S101), durch ein Kommunikationsendgerät, von Zielmedienbeschreibungsinformation als Reaktion auf das Erkennen, durch das Kommunikationsendgerät, dass ein Qualitätsparameter einer Kommunikationsverbindung zur Medienstromübertragung zwischen dem Kommunikationsendgerät und der konvergierten Vorrichtung nicht mit einem voreingestellten Schwellenwert des Qualitätsparameters übereinstimmt, umfasst:
Erfassen, durch das Kommunikationsendgerät, von zweiter Medienbeschreibungsinformation des Kommunikationsendgeräts und dritter Medienbeschreibungsinformation der konvergierten Vorrichtung als Reaktion auf das Erkennen, dass ein Qualitätsparameter einer Kommunikationsverbindung zur Medienstromübertragung zwischen dem Kommunikationsendgerät und der konvergierten Vorrichtung nicht mit einem voreingestellten Schwellenwert des Qualitätsparameters übereinstimmt, wobei die zweite Medienbeschreibungsinformation und die dritte Medienbeschreibungsinformation unterschiedlichen Medienströmen entsprechen; und
das Initiieren und Einrichten (S102), durch das Kommunikationsendgerät und gemäß der Zielmedienbeschreibungsinformation, einer neuen Medienschnittstelle zur Medienstrominteraktion zwischen dem Kommunikationsendgerät und der entfernten Vorrichtung und Durchführen einer Medienstrominteraktion umfasst:
Einrichten, durch das Kommunikationsendgerät und gemäß der zweiten Medienbeschreibungsinformation und der dritten Medienbeschreibungsinformation, einer zweiten Medienschnittstelle zwischen dem Kommunikationsendgerät und der entfernten Vorrichtung und einer dritten Medienschnittstelle zwischen der konvergierten Vorrichtung und der entfernten Vorrichtung über einen Registerserver.

4. Mediensteuerungsverfahren nach Anspruch 1, wobei das Erfassen (S101), durch ein Kommunikationsendgerät, von Zielmedienbeschreibungsinformation als Reaktion auf das Erkennen, durch das Kommunikationsendgerät, dass ein Qualitätsparameter einer Kommunikationsverbindung zur Medienstromübertragung zwischen dem Kommunikationsendgerät und der konvergierten Vorrichtung nicht mit einem voreingestellten Schwellenwert des Qualitätsparameters übereinstimmt, umfasst:
Erfassen, durch das Kommunikationsendgerät, von vierter Medienbeschreibungsinformation als Reaktion auf das Erkennen, dass ein Qualitätsparameter einer Kommunikationsverbindung zur Medienstromübertragung zwischen dem Kommunikationsendgerät und der konvergierten Vorrichtung nicht mit einem voreingestellten Schwellenwert des Qualitätsparameters übereinstimmt, wobei die vierte Medienbeschreibungsinformation Information enthält, die zum Darstellen einer Coderate eines ersten neuen Medienstroms verwendet wird, wobei die Coderate des ersten neuen Medienstroms kleiner als eine Coderate ist, die für die aktuelle Medienstromübertragung durch die konvergierte Vorrichtung verwendet wird; und
Initiieren und Einrichten (S102), durch das Kommunikationsendgerät und gemäß der Zielmedienbeschreibungsinformation, einer neuen Medienschnittstelle zur Medienstrominteraktion zwischen dem Kommunikationsendgerät und der entfernten Vorrichtung und Durchführen einer Medienstrominteraktion umfasst:
Einrichten, durch das Kommunikationsendgerät und gemäß der vierten Medienbeschreibungsinformation, einer vierten Medienschnittstelle zur Medienstrominteraktion zwischen der konvergierten Vorrichtung und der entfernten Vorrichtung über einen Registerserver.

5. Mediensteuerungsverfahren nach Anspruch 3, wobei ein Medienstrom, der der zweiten Medienbeschreibungsinformation entspricht, eine Bandbreite aufweist, die größer als die eines Medienstroms ist, der der dritten Medienbeschreibungsinformation entspricht.

6. Mediensteuerungsverfahren nach Anspruch 3, wobei der Medienstrom, der der zweiten Medienbeschreibungsinformation entspricht, ein Medienstrom ist, der von einer Medienfähigkeit des Kommunikationsendgeräts unterstützt wird, und der Medienstrom, der der dritten Medienbeschreibungsinformation entspricht, ein Medienstrom ist, der nicht von einer Medienfähigkeit des Kommunikationsendgeräts unterstützt wird.

7. Mediensteuerungsverfahren nach einem der Ansprüche 2 bis 6, wobei die Kommunikationsverbindung zur Medienstromübertragung zwischen dem Kommunikationsendgerät und der konvergierten Vorrichtung eine Kommunikationsverbindung mit kurzer Reichweite ist.

8. Mediensteuerungsverfahren nach einem der Ansprüche 1 bis 7, wobei das Erfassen (S101), durch ein Kommunikationsendgerät, von Zielmedienbeschreibungsinformation als Reaktion auf das Erkennen, durch das Kommunikationsendgerät, dass ein Qualitätsparameter einer Kommunikationsverbindung zur Medienstromübertragung zwischen dem Kommunikationsendgerät und der konvergierten Vorrichtung nicht mit einem voreingestellten Schwellenwert des Qualitätsparameters übereinstimmt, umfasst:
Erfassen, durch das Kommunikationsendgerät, von fünfter Medienbeschreibungsinformation als Reaktion auf das Erkennen, dass ein Qualitätsparameter einer Kommunikationsverbindung zur Medienstromübertragung zwischen dem Kommunikationsendgerät und der entfernten Vorrichtung nicht mit einem voreingestellten Schwellenwert des Qualitätsparameters übereinstimmt, wobei die fünfte Medienbeschreibungsinformation Information enthält, die zum Darstellen einer Coderate eines zweiten neuen Medienstroms verwendet wird, wobei die Coderate des zweiten neuen Medienstroms kleiner als eine Coderate ist, die für die aktuelle Medienstromübertragung durch die konvergierte Vorrichtung verwendet wird, und
Initiieren und Einrichten (S102), durch das Kommunikationsendgerät und gemäß der Zielmedienbeschreibungsinformation, einer neuen Medienschnittstelle zur Medienstrominteraktion zwischen dem Kommunikationsendgerät und der entfernten Vorrichtung und Durchführen einer Medienstrominteraktion umfasst:
Einrichten, durch das Kommunikationsendgerät und gemäß der fünften Medienbeschreibungsinformation, einer fünften Medienschnittstelle zur Medienstrominteraktion zwischen der konvergierten Vorrichtung und der entfernten Vorrichtung über einen Registerserver.

9. Kommunikationsendgerät, umfassend einen Speicher (302), einen Prozessor (301), einen Kommunikationsbus (303), der konfiguriert ist, um eine Kommunikation zwischen dem Prozessor (301) und dem Speicher (302) zu realisieren, und ein Datenverarbeitungsprogramm, das in dem Speicher (302) gespeichert ist und von dem Prozessor (301) ausführbar ist, wobei das Datenverarbeitungsprogramm, wenn es von dem Prozessor (301) ausgeführt wird, den Prozessor (301) veranlasst, die Schritte des Mediensteuerungsverfahrens nach einem der Ansprüche 1 bis 8 auszuführen.

## Revendications

1. Procédé de commande multimédia réalisé par un terminal mobile, comprenant :
dans un processus de transfert d'un flux multimédia entre le dispositif de fusion et un dispositif à distance, l'acquisition (S101), par un terminal mobile, d'informations de description multimédia cibles en réponse à la détection, par le terminal mobile, qu'un paramètre de qualité d'une connexion de communication pour transmission de flux multimédia entre le terminal mobile et le dispositif de fusion n'est pas conforme à un seuil prédéfini du paramètre de qualité, dans lequel le dispositif de fusion communique avec le dispositif à distance par l'intermédiaire du dispositif de communication, les informations de description multimédia cibles sont les informations de description multimédia cibles du terminal mobile ou les informations de description multimédia cibles du dispositif de fusion, et
sur la base du résultat de détermination du paramètre de qualité de la connexion de communication pour transmission de flux multimédia, le terminal mobile adopte l'un quelconque des modes de transfert multimédia suivants : l'acquisition des informations de description multimédia du terminal mobile pour permettre un traitement de secours complet du flux multimédia au terminal mobile, l'acquisition de la description multimédia des deux du terminal mobile et du dispositif de fusion pour permettre le traitement de secours partiel du flux multimédia au terminal mobile, et l'acquisition de nouvelles informations de description multimédia du dispositif de fusion pour réduire le débit de code du flux multimédia ; et
l'initialisation et l'établissement (S102), par le terminal mobile et selon les informations de description multimédia cibles, d'une nouvelle interface multimédia pour interaction de flux multimédia entre le terminal mobile et le dispositif à distance et la réalisation d'interaction de flux multimédia.

2. Procédé de commande multimédia selon la revendication 1, dans lequel l'acquisition (S101), par un terminal mobile, d'informations de description multimédia cibles en réponse à la détection, par le terminal mobile, qu'un paramètre de qualité d'une connexion de communication entre le terminal mobile et le dispositif de fusion pour transmission de flux multimédia n'est pas conforme à un seuil prédéfini du paramètre de qualité comprend :
l'acquisition, par le terminal mobile, de premières informations de description multimédia du terminal mobile en réponse à la détection, par le terminal mobile, qu'un paramètre de qualité d'une connexion de communication pour transmission de flux multimédia entre le terminal mobile et le dispositif de fusion n'est pas conforme à un seuil prédéfini du paramètre de qualité ; et
l'initialisation et l'établissement (S102), par le terminal mobile et selon les informations de description multimédia cibles, d'une nouvelle interface multimédia pour interaction de flux multimédia entre le terminal mobile et le dispositif à distance et la réalisation d'interaction de flux multimédia comprend :
l'établissement, par le terminal mobile et selon les premières informations de description multimédia du terminal mobile, d'une première interface multimédia pour interaction de flux multimédia entre le terminal mobile et le dispositif à distance par l'intermédiaire d'un serveur de registre.

3. Procédé de commande multimédia selon la revendication 1, dans lequel l'acquisition (S101), par un terminal mobile, d'informations de description multimédia cibles en réponse à la détection, par le terminal mobile, qu'un paramètre de qualité d'une connexion de communication pour transmission de flux multimédia entre le terminal mobile et le dispositif de fusion n'est pas conforme à un seuil prédéfini du paramètre de qualité comprend :
l'acquisition, par le terminal mobile, de deuxièmes informations de description multimédia du terminal mobile et de troisièmes informations de description multimédia du dispositif de fusion en réponse à la détection qu'un paramètre de qualité d'une connexion de communication pour transmission de flux multimédia entre le terminal mobile et le dispositif de fusion n'est pas conforme à un seuil prédéfini du paramètre de qualité, les deuxièmes informations de description multimédia et les troisièmes informations de description multimédia correspondant à différents flux multimédias ; et
l'initialisation et l'établissement (S102), par le terminal mobile et selon les informations de description multimédia cibles, d'une nouvelle interface multimédia pour interaction de flux multimédia entre le terminal mobile et le dispositif à distance et la réalisation d'interaction de flux multimédia comprend :
l'établissement, par le terminal mobile et selon les deuxièmes informations de description multimédia et les troisièmes informations de description multimédia, d'une deuxième interface multimédia entre le terminal mobile et le dispositif à distance et d'une troisième interface multimédia entre le dispositif de fusion et le dispositif à distance par l'intermédiaire de a serveur de registre.

4. Procédé de commande multimédia selon la revendication 1, dans lequel l'acquisition (S101), par un terminal mobile, d'informations de description multimédia cibles en réponse à la détection, par le terminal mobile, qu'un paramètre de qualité d'une connexion de communication pour transmission de flux multimédia entre le terminal mobile et le dispositif de fusion n'est pas conforme à un seuil prédéfini du paramètre de qualité comprend :
l'acquisition, par le terminal mobile, de quatrièmes informations de description multimédia en réponse à la détection qu'un paramètre de qualité d'une connexion de communication pour transmission de flux multimédia entre le terminal mobile et le dispositif de fusion n'est pas conforme à un seuil prédéfini du paramètre de qualité, les quatrièmes informations de description multimédia contenant des informations utilisées pour représenter un débit de code d'un premier nouveau flux multimédia, le débit de code du premier nouveau flux multimédia étant inférieur à un débit de code utilisé pour transmission de flux multimédia actuelle par le dispositif de fusion ; et
l'initialisation et l'établissement (S102), par le terminal mobile et selon les informations de description multimédia cibles, d'une nouvelle interface multimédia pour interaction de flux multimédia entre le terminal mobile et le dispositif à distance et la réalisation d'interaction de flux multimédia comprend :
l'établissement, par le terminal mobile et selon les quatrièmes informations de description multimédia, d'une quatrième interface multimédia pour interaction de flux multimédia entre le dispositif de fusion et le dispositif à distance par l'intermédiaire d'un serveur de registre.

5. Procédé de commande multimédia selon la revendication 3, dans lequel un flux multimédia correspondant aux deuxièmes informations de description multimédia a une largeur de bande inférieure à celle d'un flux multimédia correspondant aux troisièmes informations de description multimédia.

6. Procédé de commande multimédia selon la revendication 3, dans lequel le flux multimédia correspondant aux deuxièmes informations de description multimédia est un flux multimédia qui est pris en charge par une capacité multimédia du terminal mobile, et le flux multimédia correspondant aux troisièmes informations de description multimédia est un flux multimédia qui n'est pas pris en charge par une capacité multimédia du terminal mobile.

7. Procédé de commande multimédia selon l'une quelconque des revendications 2 à 6, dans lequel la connexion de communication pour transmission de flux multimédia entre le terminal mobile et le dispositif de fusion est une connexion de communication à courte portée.

8. Procédé de commande multimédia selon l'une quelconque des revendications 1 à 7, dans lequel l'acquisition (S101), par un terminal mobile, d'informations de description multimédia cibles en réponse à la détection, par le terminal mobile, qu'un paramètre de qualité d'une connexion de communication pour transmission de flux multimédia entre le terminal mobile et le dispositif de fusion n'est pas conforme à un seuil prédéfini du paramètre de qualité comprend :
l'acquisition, par le terminal mobile, de cinquièmes informations de description multimédia en réponse à la détection qu'un paramètre de qualité d'une connexion de communication pour transmission de flux multimédia entre le terminal mobile et le dispositif à distance n'est pas conforme à un seuil prédéfini du paramètre de qualité, les cinquièmes informations de description multimédia contenant des informations utilisées pour représenter un débit de code d'un second nouveau flux multimédia, le débit de code du second nouveau flux multimédia étant inférieur à un débit de code utilisé pour transmission de flux multimédia actuelle par le dispositif de fusion ; et
l'initialisation et l'établissement (S102), par le terminal mobile et selon les informations de description multimédia cibles, d'une nouvelle interface multimédia pour interaction de flux multimédia entre le terminal mobile et le dispositif à distance et la réalisation d'interaction de flux multimédia comprend :
l'établissement, par le terminal mobile et selon les cinquièmes informations de description multimédia, d'une cinquième interface multimédia pour interaction de flux multimédia entre le dispositif de fusion et le dispositif à distance par l'intermédiaire d'un serveur de registre.

9. Terminal mobile, comprenant une mémoire (302), un processeur (301), un bus de communication (303) configuré pour réaliser une communication entre le processeur (301) et la mémoire (302), et un programme de traitement de données stocké dans la mémoire (302) et exécutable par le processeur (301), dans lequel le programme de traitement de données, lorsqu'il est exécuté par le processeur (301), amène le processeur (301) à effectuer les étapes du procédé de commande multimédia selon l'une quelconque des revendications 1 à 8.
